# EUROPÄISCHE PATENTANMELDUNG

(11) **EP 1 168 795 A2**
(43) Veröffentlichungstag der Anmeldung: **02.01.2002**
(21) Anmeldenummer: 01104393.2
(22) Anmeldetag: 23.02.2001
(51) Int. Cl.: H04M 3/54

(54) **Anzeige des ursprünglich gerufenen Teilnehmers bei Anrufweiterschaltung**

(30) Priorität: 29.06.2000 DE 10031759
(71) Anmelder: Tenovis GmbH & Co. KG, 60362 Frankfurt am Main (DE)
(72) Erfinder: Rodewald, Frank, 50181 Bedburg (DE)
(74) Vertreter: Bohnenberger, Johannes, Dr.

(57) **Zusammenfassung**

Es wird ein Verfahren zur Zielgruppenidentifikation nach wenigstens einer Umleitung eines Anrufs vorgeschlagen, das dazu dient, einen zu einem Endgerät umgeleiteten Anruf eine anzeigbare Information hinzuzufügen, wer ursprünglich angerufen werden sollte. Die hinzugefügte Information ist entweder ein Text oder die Durchwahlnummer selbst. Sind mehrere Telekommunikationsanlagen vernetzt, dann wird die anzuzeigende Information im Informationselement Facility oder im Anzeigeelement Display übertragen.

## Beschreibung

### Stand der Technik

Die Erfindung geht aus von einem Verfahren zur Zielgruppenidentifikation nach der Gattung des unabhängigen Patentanspruchs.

Es ist bereits bekannt, eine Telekommunikationsanlage für mehrere kleinere Firmen gemeinsam zu nutzen. Wird dabei ein Anruf nicht entgegen genommen, dann wird dieser Anruf von der Telekommunikationsanlage zu einem übergeordneten Endgerät (zum Beispiel Nachtstelle) umgeleitet.

### Vorteile der Erfindung

Das erfindungsgemäße Verfahren zur Zielgruppenidentifikation mit den Merkmalen des unabhängigen Patentanspruchs hat demgegenüber den Vorteil, dass die ursprüngliche Durchwahlnummer und damit verbundene Informationen, die die Telekommunikationsanlage den Anrufdaten hinzugefügt hat, während Umleitungen zu beliebigen Endgeräten nicht verloren gehen. Damit können diese Informationen bei einem Endgerät angezeigt werden, so dass eine Person, die das Endgerät bedient, diese Informationen vor Entgegennahme des Anrufs aufnehmen kann. Dies verkürzt den Aufwand für die Entgegennahme eines Anrufs, da dann klar ist, welche Person der Anrufer ursprünglich anrufen wollte.

Durch die in den abhängigen Ansprüchen aufgeführten Maßnahmen und Weiterbildungen sind vorteilhafte Verbesserungen des im unabhängigen Patentanspruch angegebenen Verfahrens zur Zielgruppenidentifikation möglich.

Besonders vorteilhaft ist, dass auch bei Mehrfachumleitungen die Information, die der Durchwahlnummer zugeordnet wird, erhalten bleibt. Bei vernetzten Telekommunikationsanlagen wird die von der ersten Telekommunikationsanlage der Durchwahlnummer zugeordneten Information weiter übertragen, so dass diese Information nicht verloren geht. Dabei wird je nach Signalisierungsverfahren, diese Information im Informationselement Facility oder im Anzeigeelement Display mit übertragen. Das Informationselement Facility wird für PSS1/QSIG verwendet und das Anzeigeelement Display für DSS1.

Alternativ kann die Durchwahlnummer als eigenes Informationselement Facility übertragen werden. Die empfangende Telekommunikationsanlage speichert diese Nummer und ermittelt die zugeordneten Informationen.

Die der ursprünglichen Durchwahlnummer zugeordneten Information wird bis zur Auslösung des Anrufs gespeichert, so dass auch bei späteren Umleitungen, diese Information erhalten bleibt, um dann jeweils an einem Endgerät angezeigt zu werden.

Die der Durchwahlnumner zugeordnete Information ist entweder ein beliebiger Text oder im einfachsten Fall die Durchwahlnummer selbst. Als Text wird insbesondere der Gerufene oder die Organisation des Gerufenen verwendet. Dies erleichtert einer Person an einem gerufenen Endgerät die Entgegennahme eines Anrufs.

Ein weiterer Vorteil besteht darin, die Durchwahlnummer als Anruferidentifikation im Informationselement Calling Party Number zu übertragen, damit Endgeräte, die über einen Informationsspeicher verfügen, die der Durchwahlnummer zuzuordnende Information ermitteln und anzeigen.

Darüber hinaus ist es von Vorteil, dass die Information, die der Durchwahlnummer zugeordnet wurde, zusätzlich zu einer Anruferidentifikation angezeigt wird. Damit wird einer Person an einem Endgerät klar, wer anruft und welche Person oder Organisation angerufen werden sollte.

Schließlich ist es auch von Vorteil, dass eine Telekommunikationsanlage und ein Endgerät zur Durchführung des erfindungsgemäßen Verfahrens vorliegen und zur Durchführung des erfindungsgemäßen Verfahrens entsprechende Mittel aufweisen.

### Zeichnung

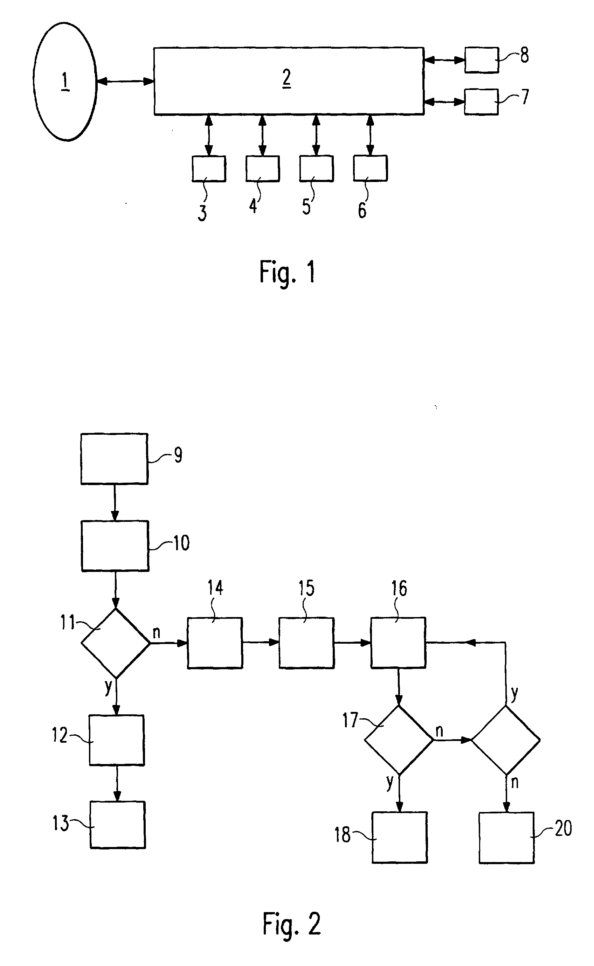

Ausführungsbeispiele der Erfindung sind in der Zeichnung dargestellt und werden in der nachfolgenden Beschreibung näher erläutert. Es zeigt Figur 1 ein Blockschaltbild einer Telekommunikationsanlage, die mit verschiedenen Endgeräten verbunden ist, und Figur 2 das erfindungsgemäße Verfahren als Flußdiagramm.

### Beschreibung

Kleinere Firmen und Abteilungen, z. B. in einem kleinen Standort eines größeren Konzerns, verwenden für ihr Telekommunikationsnetz eine Telekommunikationsanlage, an die die Endgeräte der Abteilung oder der verschiedenen kleinen Firmen angeschlossen sind. Um einen Anruf entgegen zu nehmen, bei dem der Gerufene den Anruf selbst nicht entgegennimmt, ist eine Umleitung zu einem anderen Endgerät, beispielsweise dem Endgerät einer Sekretärin, notwendig. Für die Person, die das Endgerät bedient, ist es von Vorteil, wenn Sie erkennt, welche Person ursprünglich angerufen wurde, bevor sie den Anruf entgegennimmt.

Erfindungsgemäß wird daher eine Zielgruppenidentifikation nach einer Umleitung eines Anrufs realisiert, wobei die Durchwahlnummer des Anrufs einer Information zugeordnet wird und diese Information am Endgerät, zu dem der Anruf umgeleitet wurde, angezeigt wird. Dies soll auch für Mehrfachumleitungen gelten, da die Telekommunikationsanlage die der Durchwahlnummer zugeordneten Information bis zur Auslösung des Anrufs abspeichert. Bei vernetzten Telekommunikationsanlagen wird die der Durchwahlnummer zugeordnete Information bei dem Signalisierungsverfahren PSS1/QSIG mit dem Informationselement Facility und bei DSS1 mit dem Anzeigeelement Display übertragen. Alternativ kann die Durchwahlnummer als eigenes Informationselement Facility übertragen werden. Die empfangende Telekommunikationsanlage speichert diese Nummer und ermittelt die zugeordneten Informationen.

In Figur 1 ist als Blockschaltbild dargestellt, wie eine Telekommunikationsanlage einer Gruppe von kleinen Firmen oder einer Gruppe von Abteilungen mit Endgeräten und mit dem öffentlichen Telekommunikationsnetz verbunden ist. Über ein Netzinterface ist das öffentliche Telekommunikationsnetz 1 mit einer Telekommunikationsanlage 2 verbunden. An die Telekommunikationsanlage 2 sind über jeweils einen ersten, zweiten, dritten, vierten, fünften und sechsten Anschluß Endgeräte 3, 4, 5, 6, 7 und 8 angeschlossen. Beispielhaft sind sechs Endgeräte an die Telekommunikationsanlage 2 angeschlossen. Es ist jedoch möglich, mehr oder weniger Endgeräte an die Telekommunikationsanlage 2 anzuschließen. Weiterhin ist es möglich, dass die Telekommunikationsanlage 2 mit weiteren Telekommunikationsanlagen verbunden ist, wobei dann als Signalisierungsverfahren hier PSS1/QSIG verwendet wird. Alternativ ist auch DSS1 oder ein anderes Signalisierungsverfahren möglich.

Ein Anruf, der über das öffentliche Telekommunikationsnetz 1 mit einer Durchwahlnummer zu der Telekommunikationsanlage 2 übertragen wird, wird von der Telekommunikationsanlage 2 zu dem Endgerät zugeordnet, dessen Endgerätenummer der Durchwahlnummer entspricht beziehungsweise zuzuordnen ist. Hier ist es beispielhaft das Endgerät 3. Da der Anruf am Endgerät 3 nicht entgegengenommen wird, leitet die Telekommunikationsanlage 2 nach einer vorgegebenen Zeit (beispielsweise 10 Sekunden) den Anruf zu einem anderen Endgerät, das ist hier das Endgerät 8, um. Genauso wäre eine direkte Rufumleitung oder ein Umlegen nach Entgegennahme des Anrufs möglich. Dazu ordnet die Telekommunikationsanlage 2 der Durchwahlnummer eine Information zu, die in einem Anzeigenfeld des Endgeräts 8 dargestellt wird. Hier wird der Durchwahlnummer der Name der gerufenen Person zugeordnet.

Wird ein Endgerät von mehreren Personen verwendet, dann werden mehrere Namen als Information der Durchwahlnummer zugeordnet. Dazu weist die Telekommunikationsanlage 2 eine Tabelle in einem Speicher auf, die diese Zuordnungen beinhaltet. Wird der Anruf auch vom Endgerät 8 nicht entgegengenommen, dann leitet die Telekommunikationsanlage 2 nach einer vorgegebenen Zeit den Anruf zu einem weiteren Endgerät, dem Endgerät 7, um. Auch dem Endgerät 7 wird die Information übertragen, die im Anzeigefeld des Endgerätes 7 dargestellt wird. Damit wird sichergestellt, dass diese Information bei Umleitungen nicht verloren geht. Erst wenn der Anruf ausgelöst wird, dann löscht die Telekommunikationsanlage 2 diese Information aus ihrem Verbindungsspeicher, ohne jedoch die Tabelle zu löschen. Eine Auslösung wird hier von der Telekommunikationsanlage vorgenommen, wenn auch das Endgerät 7 nach einer vorgegebenen Zeit den Anruf nicht entgegennimmt.

In Figur 2 ist das erfindungsgemäße Verfahren zur Zielgruppenidentifikation nach einer Umleitung als Flußdiagramm dargestellt. In Verfahrensschritt 9 wird der Anruf aus dem öffentlichen Telekommunikationsnetz 1 von der Telekommunikationsanlage 2 empfangen. Die Telekommunikationsanlage 2 wertet im Verfahrensschritt 10 den Anruf bezüglich der Durchwahlnummer aus. Der Anruf wird dann von der Telekommunikationsanlage 2 zu dem dieser Durchwahlnummer zuzuordnendem Endgerät, hier dem Endgerät 3, übertragen.

In Verfahrensschritt 11 wird überprüft, ob das Endgerät 3 den Anruf entgegennimmt. Ist das der Fall, dann wird in Verfahrensschritt 12 auf der Anzeige des Endgeräts 3 die Nummer des Anrufers oder ein Textfeld, das der Gerufene an seinem Endgerät 3 mit dieser Anrufernummer verknüpft hat, angezeigt. In Verfahrensschritt 13 wird dann der Anruf entgegengenommen.

Wurde in Verfahrensschritt 11 festgestellt, dass der Anruf vom Endgerät 3 nach einer vorgegebenen Zeit nicht entgegengenommen wird, dann wird in Verfahrensschritt 14 von der Telekommunikationsanlage 2 eine Umleitung zu einem anderen Endgerät, hier das Endgerät 8, vorgenommen. Dafür ordnet in Verfahrensschritt 15 die Telekommunikationsanlage 2 der Durchwahlnummer des Anrufs, eine Information zu, die in der Telekommunikationsanlage 2 abgespeichert ist. Ist dies nicht möglich, dann verwendet die Telekommunikationsanlage 2 die Durchwahlnummer als die Information. In Verfahrensschritt 16 wird dann das entsprechende Endgerät von der Telekommunikationsanlage 2 ausgewählt und die der Durchwahlnummer zugeordnete Information angezeigt. In Verfahrensschritt 17 wird überprüft, ob das ausgewählte Endgerät den Anruf nach einer vorgegebenen Zeit annimmt. Ist das der Fall, dann wird in Verfahrensschritt 18 der Anruf durchgeführt. Ist das nicht der Fall, dann wird in Verfahrensschritt 19 überprüft, ob noch weitere Umleitungen zu anderen Endgeräten vorhanden sind. Ist das der Fall, dann wird in Verfahrensschritt 16 das entsprechende Endgerät ausgewählt. Ist das nicht der Fall, dann wird in Verfahrensschritt 20 der Anruf ausgelöst und gegebenenfalls wird dem Anrufenden eine automatische Antwort übermittelt.

## Patentansprüche

1. Verfahren zur Zielgruppenidentifikation nach wenigstens einer Umleitung eines Anrufs, wobei der Anruf mit einer Durchwahlnummer für eine Zielgruppe von einer Telekommunikationsanlage empfangen wird, wobei der Anruf von der Telekommunikationsanlage (2) zu einem Endgerät (8) umgeleitet wird, **dadurch gekennzeichnet, dass** die Telekommunikationsanlage (2) die Durchwahlnummer des Anrufs speichert und einer Information zuordnet, dass die Telekommunikationsanlage (2) dem Endgerät (8) mit dem umgeleiteten Anruf die Information und die Durchwahlnummer als Anzeigeinformation überträgt und dass am Endgerät (8) die Information angezeigt wird, sobald das Endgerät (8) den umgeleiteten Anruf empfängt.

2. Verfahren nach Anspruch 1, **dadurch gekennzeichnet, dass** die Telekommunikationsanlage (2) den Anruf nacheinander zu verschiedenen Endgeräten (7, 8) umleitet, bis der Anruf angenommen oder ausgelöst wird, wobei dem umgeleiteten Anruf jeweils die der Durchwahlnummer zugeordneten Informationen und die Durchwahlnummer als Anzeigeinformation hinzugefügt werden.

3. Verfahren nach Anspruch 1 oder 2, **dadurch gekennzeichnet, dass** die Telekommunikationsanlage (2) mit weiteren Telekommunikationsanlagen vernetzt ist.

4. Verfahren nach Anspruch 3, **dadurch gekennzeichnet, dass** die der Durchwahlnummer zugeordnete Information im Informationselement Facility oder im Anzeigeelement Display übertragen wird.

5. Verfahren nach Anspruch 3, **dadurch gekennzeichnet, dass** die Durchwahlnummer in einem eigenen Informationselement Facility übertragen wird.

6. Verfahren nach Anspruch 5, **dadurch gekennzeichnet, dass** die übermittelte Durchwahlnummer wieder gespeichert wird, wobei dann nach Anspruch 1 und/oder 2 fortgefahren wird.

7. Verfahren nach einem der vorhergehenden Ansprüche, **dadurch gekennzeichnet, dass** die Durchwahlnummer bis zur Auslösung des Anrufs abgespeichert wird.

8. Verfahren nach einem der vorhergehenden Ansprüche, **dadurch gekennzeichnet, dass** für die der Durchwahlnummer zugeordneten Information ein Text und/oder die Durchwahlnummer selbst verwendet werden.

9. Verfahren nach einem der vorhergehenden Ansprüche, **dadurch gekennzeichnet, dass** die Durchwahlnummer im Informationselement Calling Party Number an das Endgerät (8) übertragen wird.

10. Verfahren nach Anspruch 9, **dadurch gekennzeichnet, dass** das Endgerät (8) der Durchwahlnummer eine Information zuordnet.

11. Verfahren nach einem der vorhergehenden Ansprüche, **dadurch gekennzeichnet, dass** am gerufenen Endgerät (7, 8) eine Anruferidentifikation angezeigt wird.

12. Telekommunikationsanlage zur Durchführung des Verfahrens nach einem der Ansprüche 1 bis 7, **dadurch gekennzeichnet, dass** die Telekommunikationsanlage einen Prozessor zur Durchführung des Verfahrens und einen Speicher zur Zuordnung der Informationen aufweist.

13. Endgerät (7, 8) zur Durchführung des Verfahrens nach einem der Ansprüche 1 bis 7, **dadurch gekennzeichnet, dass** das Endgerät eine Anzeige zur Darstellung der Informationen und einen Speicher aufweist.
